# EUROPEAN PATENT SPECIFICATION

(11) **EP 2 074 322 B1**
(45) Date of publication and mention of the grant of the patent: **16.01.2013**
(21) Application number: 06851968.5
(22) Date of filing: 12.10.2006
(51) Int. Cl.: F02K 3/02, F02K 3/075

(54) **TURBOFAN ENGINE**
MANTELSTROM-TRIEBWERK
TURBOREACTEUR A DOUBLE FLUX

(43) Date of publication of application: 01.07.2009
(73) Proprietor: United Technologies Corporation, Hartford, CT 06101 (US)
(72) Inventor: GRABOWSKI, Zbigniew M., Farmington, CT 06032 (US); MCVEY, William J., North Granby, CT 06060 (US)
(74) Representative: Hull, James Edward
(86) International application number: PCT/US2006/039942
(87) International publication number: WO 2008/063152

(56) References cited:
- US-A- 4 112 677
- US-A- 4 827 712
- US-A- 5 833 140
- US-B1- 6 223 616
- EBO S W AVIA: "PRATT & WHITNEY LAUNCHES GEARED TURBOFAN ENGINE" TION WEEK AND SPACE TECHNOLOGY, MCGRAW-HILL COMPAGNY, NEW YORK, NY, US, vol. 148, no. 8, 23 February 1998 (1998-02-23), pages 32-34, XP000735249 ISSN: 0005-2175

## Description

### BACKCROUND OF THE INVENTION

This invention relates to a turbofan engine, and more particularly, the invention relates to a turbofan engine having an effectively variable nozzle exit area.

A turbofan engine typically includes a fan nacelle surrounding a core nacelle. A spool is housed in the core nacelle and supports a compressor and turbine. A fan is arranged in the fan nacelle upstream from the core nacelle. Flow from the fan bypasses the core nacelle through a bypass flow path arranged between the core and fan nacelle. The bypass flow path includes an exit nozzle that is typically fixed. In many turbofan engines, the fan is driven directly by the spool and rotates at the same speed as the spool.

The engine's design is affected by such factors as the pressure ratio of the fan. Propulsive efficiency improvements, and hence fuel consumption, can be gained by reducing the turbofan pressure ratio. Direct drive turbofan engines have several design challenges. In one example, the speed of the spool is determined by the appropriate tip speed for a desired turbofan pressure ratio. In some applications, as the fan pressure ratio is reduced, additional compressor and turbine stages must be added to the spool to obtain the needed amount of work from the compressor and turbine at this speed. The result is increased engine weight and cost.

Some turbofan engines employ structure at the aft portion of the bypass flow path that is used to change the physical area of the nozzle. This arrangement enables manipulation of various engine operating conditions by increasing and decreasing the nozzle area. However, this type of engine arrangement has used a fan driven directly by the spool.

What is needed is a turbofan engine having a fan that is decoupled from the low spool and provisioned with an effectively adjustable fan nozzle that provides improved efficiency.

A prior art turbofan engine, having the features of the preamble of claim 1, is shown in US-4112677. Another prior art turbofan engine is shown in US-4827712.

### SUMMARY OF THE INVENTION

According to the present invention, there is provided a turbofan engine as claimed in claim 1.

These and other features of the present invention can be best understood from the following specification and drawings, where the following is a brief description of the invention.

### BRIEF DESCRIPTION OF THE DRAWINGS

Figure 1 is a cross-sectional view of an example turbofan engine.
Figure 2 is a partially broken perspective view of the turbofan engine shown in Figure 1.
Figure 3 is a schematic of a gear train shown In Figure 1.

### DETAILED DESCRlPTION OF THE PREFERRED EMBODIMENT

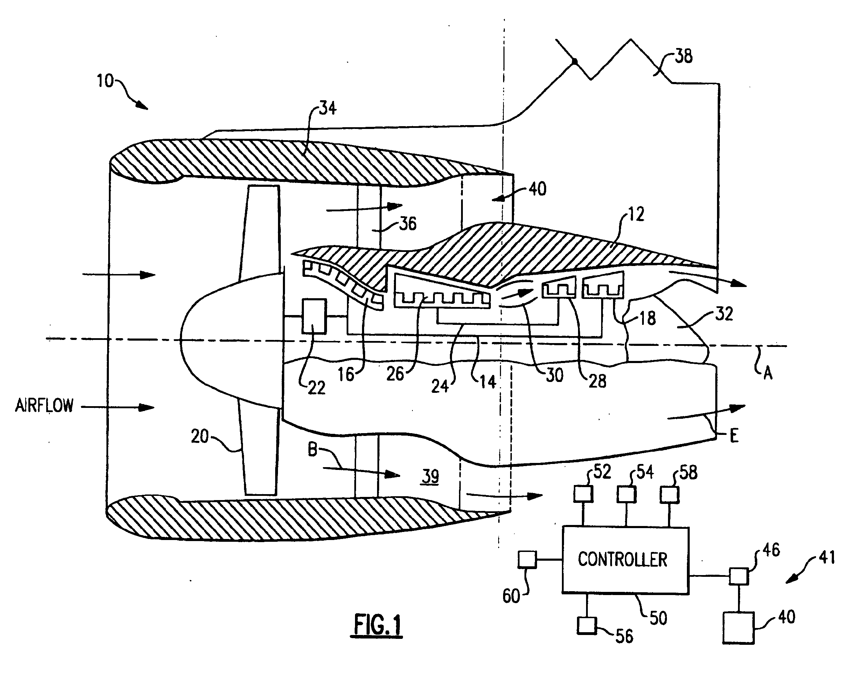

A geared turbofan engine 10 is shown in Figure 1. A pylon 38 secures the engine 10 to an aircraft. The engine 10 includes a core nacelle 12 that houses a low spool 14 and high spool 24 rotatable about an axis A. The low spool 14 supports a low pressure compressor 16 and low pressure turbine 18. The low spool 14 drives a fan 20 through a gear train 22. The high spool 24 supports a high pressure compressor 28 and high pressure turbine 28. A combustor 30 is arranged between the high pressure compressor 26 and high pressure turbine 28. Compressed air from compressors 16, 26 mixes with fuel from the combustor 30 and is expanded in turbines 18, 28.

Airflow enters a fan nacelle 34, which surrounds the core nacelle 12 and turbofan 20. The fan 20 directs air into the core nacelle 12, which is used to drive the turbines 18, 28, as is known in the art. Turbine exhaust E exits the core nacelle 12 once it has been expanded in the turbines 18, 28, in a passage provided between the core nacelle and a tail cone 32

The core nacelle 12 is supported within the fan nacelle 34 by structure 36. which are comMonly referred to as upper and lower bifurcations A generally annular bypass flow path 39 is arranged between the core and fan nacelles 12, 34 The example illustrated in Figure 1 depicts a high bypass flow arrangement in which approximately eighty percent of the airflow entering the fan nacelle 34 bypasses the core nacelle 12 The bypass flow 8 within the bypass flow path 39 exits the fan nacelle 34 through a nozzle exit area 40

For the engine 10 shown in Figure 1, a significant amount of thrust may be provided by the bypass flow B due to the high bypass ratio. Thrust is a function of density, velocity and area. One or more of these parameters can be manipulated to vary the amount and direction of thrust provided by the bypass flow B. in one example, the engine 10 includes a structure associated with the nozzle exit area 40 to change the physical area and geometry to manipulate the thrust provided by the bypass flow B However, it should be understood that the nozzle exit area might be effectively altered by other than structural changes, for example, by altering the boundary layer, which changes the flow velocity. Furthermore, it should be understood that any device used to effectively change the nozzle exit area is not limited to physical locations near the exit of the fan nacelle 34, but rather, includes altering the bypass flow B at any suitable location in the bypass flow path

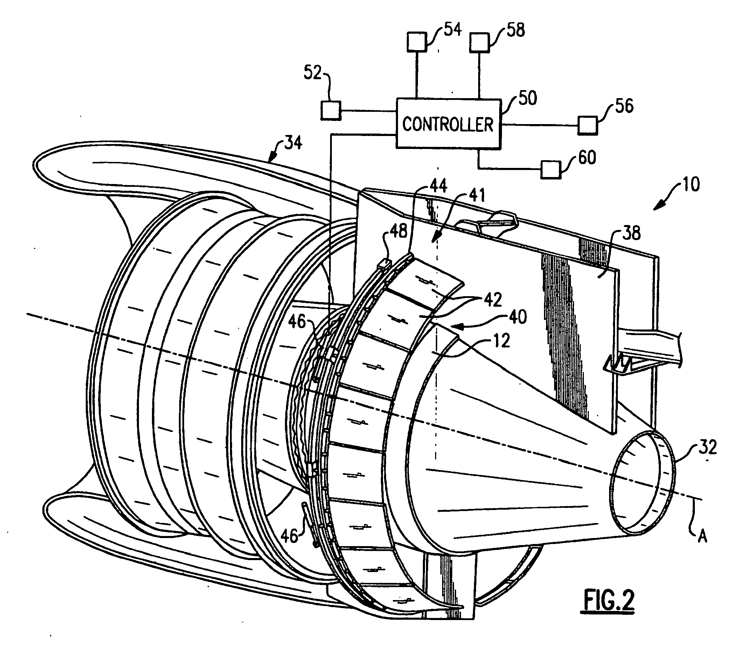

The engine 10 has a flow control device 41, indicated in Figure 2 that is used to effectively change the nozzle exit area In one example, the flow control device 41 provides the fan nozzle exit area 40 for discharging axially the bypass flow B pressurized by the upstream fan 20 of the engine 10. A significant amount of thrust is provided by the bypass flow B due to the high bypass ratio The fan 20 of the engine 10 is designed for a particular flight condition, typically cruise at 0.8 Mach and 35,000 feet (1066.8 m). The fan 20 is designed at a particular fixed stagger angle for an efficient cruise condition The flow control device 41 is operated to vary the nozzle exit area 40 to adjust fan bypass airflow such that the angle of attack or incidence on the fan blade is maintained close to design incidence at other flight conditions, such as landing and takeoff. This enables desired engine operation over a range of flight conditions with respect to engine performance and other engine operational parameters such as noise level. In one example, the flow control device 41 defines a nominal converged position for the nozzle exit area 40 at cruise and climb conditions, and radially opens relative thereto to define a diverged nozzle position for other flight conditions. The flow control device 41 provides an approximately 20% change in the nozzle exit area 40.

In one example, the flow control device 41 includes multiple hinged flaps 42 arranged circumferentially about the rear of the fan nacelle 34. The hinged flaps 42 can be actuated independently and/or in groups using segments 44. In one example, the segments 44 and each hinged flap 42 can be moved angularly using actuators 46. The segments 44 are guided by tracks 48 in one example.

A controller 50 is programmed to command the flow control device 41 to effectively change the nozzle exit area 40 for achieving a desired engine operating condition. In one example, sensors 52-60 communicate with the controller 50 to provide information indicative of an undesired engine operating condition. In the example shown in Figure 2, the controller 50 commands actuators 46 to move the flaps to physically increase or decrease the size of the nozzle exit area 40.

In the examples shown, the engine 10 is a high bypass turbofan arrangement. In one example, the bypass ratio is greater than 10:1, and the fan diameter is substantially larger than the diameter of the low pressure compressor 16. The low pressure turbine 18 has a pressure ratio that is greater than 5:1, in one example.

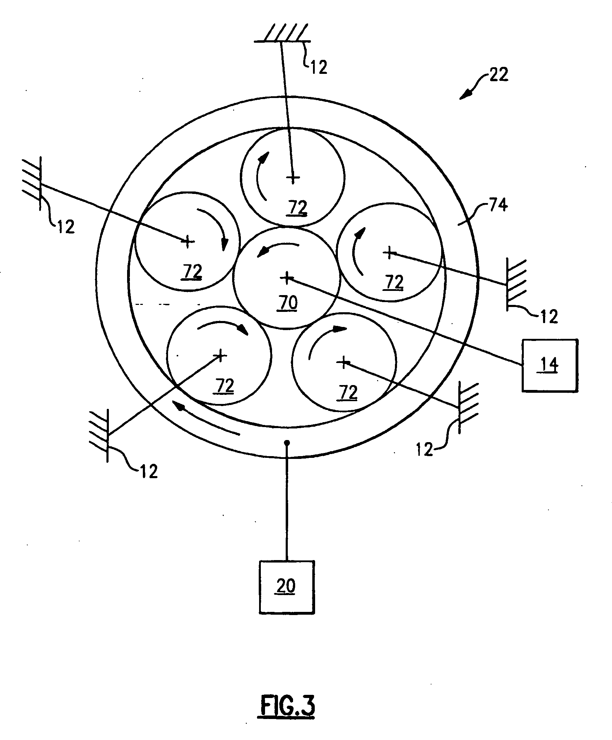

The gear train 22 is an epicyclical gear train, for example, which is shown in Figure 3. In one example, the epicyclical gear train is a star gear train, providing a gear reduction ratio of greater than 2.5:1. The gear train 22 includes a sun gear 70 that is coupled to the low spool 14. Star gears 72 surround and mesh with the sun gear 70. The star gears 72 are fixed against rotation about the sun gear 70 by rotationally supporting the star gear 72 with structure grounded to the core nacelle 12. A ring gear 74 surrounds and meshes with the star gears 72. The fan 20 is driven by and connected to the ring gear 76. Thus, gear train 22 rotationally drives the fan 20 at a slower speed relative to low spool 14. As a result, a lower pressure ratio across the fan 20 can be attained, which provides greater fuel efficiency. Further, the slower speed of the fan 20 as compared to the low spool 14 requires less structural reinforcement than direct drive turbofan engines due to the lower fan blade tip speed. Moreover, additional compressor and turbine stages can be eliminated since the low spool 14 can rotate faster than the fan 20.

Although an example embodiment of this invention has been disclosed, a worker of ordinary skill in this art would recognize that certain modifications would come within the scope of this invention as defined in the appended claims.

## Claims

1. A turbofan engine (10) comprising:
a fan nacelle (34) surrounding a core nacelle (12) that houses a spool,
wherein the spool is a low spool (14), the core nacelle (12) houses a high spool (24) rotatable relative to the low spool (14), and a low pressure turbine (18) mounted on the low spool (14), the fan and core nacelles (34, 12) providing a bypass flow path (29) having a nozzle exit area (40);
a fan (20) arranged within the fan nacelle (34) upstream from the core nacelle (12);
a flow control device (41) adapted to effectively change the nozzle exit area (40) to obtain a desired operating condition for the turbofan engine (10), and
a gear train (22) coupling the low spool (14) and fan (20) for reducing a fan rotational speed relative to a low spool rotational speed.
**characterised in that** said turbofan engine (10) further comprises:
a low pressure compressor (16) mounted on said low spool (14).

2. The turbofan engine (10) according to claim 1, wherein the flow control device (41) includes a controller (50) programmed to effectively change the nozzle exit area (40) in response to a condition detected by at least one sensor (52,54,56,58,60) indicative of an undesired operating condition to obtain the desired operating condition.

3. The turbofan engine (10) according to claim 2, wherein the controller (50) commands an actuator (46) to physically change a size of the nozzle exit area (40).

4. The turbofan engine (10) according to claim 1, wherein the gear train (22) is an epicyclical gear train.

5. The turbofan engine (10) according to claim 4, wherein the epicyclical gear train (22) is a star gear train.

6. The turbofan engine (10) according to claim 1, wherein a high pressure compressor (26) and turbine (28) are mounted on the high spool (24).

7. The turbofan engine (10) according to claim 4, wherein the flow control device (41) includes a controller (50) programmed to effectively change the nozzle exit area (40) in response to a condition detected by at least one sensor (52,54,56,58,60) indicative of an undesired operating condition to obtain the desired operating condition.

8. The turbofan engine (10) according to claim 7, wherein the controller (50) commands an actuator (46) to physically change a size of the nozzle exit area (40).

9. The turbofan engine according to claim 5, wherein the star gear train (22) provides a gear reduction ratio of greater than 2.5:1.

10. The turbofan engine (10) according to claim 1, wherein the bypass flow path (39) provides a bypass ratio greater than 10:1.

## Patentansprüche

1. Turbobläser-Maschine (10) umfassend:
eine Bläsergondel (34), die eine Kerngondel (12), die eine Welle aufnimmt, umschließt, wobei die Welle eine Niederdruck-Welle (14) ist, wobei die Kerngondel (12) eine Hochdruck-Welle (24), die relativ zu der Niederdruck-Welle (14) rotierbar ist, und eine Niederdruck-Turbine (18) aufnimmt, die auf der Niederdruck-Welle (14) abgebracht ist, wobei die Bläsergondel und die Kerngondel (34, 12) einen Bypass-Strömungsweg (29) bereitstellen, der einen Düsen-Ausgangsbereich (40) aufweist:
einen Bläser (20), der innerhalb der Bläsergondel (34) stromaufwärts der Kerngondel (12) angeordnet ist;
eine Strömungs-Steuerungs-/ Regelungsvorrichtung (41), die dazu ausgebildet ist, den Düsenausgangsbereich (40) effektiv zu ändern, um einen gewünschten Betriebszustand für die Turbobläser-Maschine (10) zu erhalten, und
einen Getriebestrang (22), der die Niederdruck-Welle (14) und den Bläser (20) zum Reduzieren einer Bläser-Drehzahl relativ zu einer Niederdruck-Spulen-Drehzahl verbindet,
**dadurch gekennzeichnet, dass** die Turbobläser-Maschine (10) des Weiteren umfasst:
einen Niederdruck-Kompressor (16), der an der Niederdruck-Welle (14) angebracht ist.

2. Turbobläser-Maschine (10) nach Anspruch 1, wobei die Strömungs-Steuerwigs-/ Regelungsvorrichtung (41) eine Steuerung/ Regelung (50) beinhaltet, die dazu programmiert ist, den Düsenausgangsbereich (40) in Erwiderung auf einen von zumindest einem Sensor (52, 54, 56, 58, 60) ermittelten Zustand, der einen unerwünschten Betriebszustand anzeigt, effektiv zu ändern, um den gewünschten Betriebszustand zu erhalten.

3. Turboblaser-Maschine (10) nach Anspruch 2, wobei die Steuerung/Regelung (50) einen Aktuator (46) anweist, eine Größe des Düsenausgangsbereichs (40) physikalisch zu ändern.

4. Turbobläser-Maschine (10) nach Anspruch 1, wobei der Getriebestrang (22) ein Umlaufrader-Getriebestrang ist.

5. Turbobläser-Maschine (10) nach Anspruch 4, wobei der Umlaufräder-Getriebestrang (22) ein Planetengetriebestrang ist.

6. Turbobläser-Maschine (10) nach Anspruch 1, wobei ein Hochdruck-Kompressor (26) und eine Turbine (28) an der Hochdruck-Welle (24) angebracht sind.

7. Turbobläser-Maschine (10) nach Anspruch 4, wobei die Strömungs-Steuerungs-/ Regelungsvorrichtung (41) eine Steuerung/ Regelung (50) beinhaltet, die dazu programmiert ist, den Düsenausgangsbereich (40) in Erwiderung auf einen von zumindest einem Sensor (52, 54, 56, 58, 60) ermittelten Zustand, der einen unerwünschten Betriebszustand anzeigt, effektiv zu ändern, um den gewünschten Batriebszustand zu erhalten.

8. Turbobläser-Maschine (10) nach Anspruch 7, wobei die Steuerung/Regelung (50) es einem Aktuator (46) befiehlt, eine Größe des Düsenausgangsbereichs (40) physikalisch zu ändern.

9. Turbobläser-Maschine (10) nach Anspruch 5, wobei der Planetengetriebestrang (22) ein Untersetzungsverhältnis, das größer als 2, 5:1 ist, bereitstellt.

10. Turbobläser-Maschine (10) nach Anspruch 1, wobei der Bypass-Strömungsweg (39) ein Bypassverhaltnis, das größer als 10:1 ist, bereitstellt.

## Revendications

1. Turboréacteur à double flux (10) comprenant :
une nacelle de soufflante (34) entourant une nacelle de coeur (12) qui reçoit une bobine, la bobine étant une bobine inférieure (14), la nacelle de coeur (12) recevant une bobine supérieure (24) pouvant tourner par rapport à la bobine inférieure (14), et une turbine basse pression (18) montée sur la bobine inférieure (14), les nacelles de soufflante et de coeur (34, 12) fournissant un chemin d'écoulement de dérivation (29) ayant une surface de sortie de buse (40) ;
une soufflante (20) agencée à l'intérieur de la nacelle de soufflante (34) en amont de la nacelle de coeur (12) ;
un dispositif de commande d'écoulement (41) prévu pour modifier efficacement la surface de sortie de buse (40) pour obtenir un état de fonctionnement souhaité pour le turboréacteur à double flux (10), et
un train d'engrenage (22) accouplant la bobine inférieure (14) et la soufflante (20) pour réduire une vitesse de rotation de la soufflante par rapport à une vitesse de rotation de la bobine inférieure,
**caractérisé en ce que** ledit turboréacteur à double flux (10) comprend en outre :
un compresseur basse pression (16) monté sur ladite bobine inférieure (14).

2. Turboréacteur à double flux (10) selon la revendication 1, dans lequel le dispositif de commande d'écoulement (41) comporte un dispositif de commande (50) programmé pour modifier efficacement la surface de sortie de buse (40) en réponse à un état détecté par au moins un capteur (52, 54, 56, 58, 60) indiquant un état de fonctionnement non souhaité, pour obtenir l'état de fonctionnement souhaité.

3. Turboréacteur à double flux (10) selon la revendication 2, dans lequel le dispositif de commande (50) ordonne à un actionneur (46) de modifier physiquement une dimension de la zone de sortie de buse (40).

4. Turboréacteur à double flux (10) selon la revendication 1, dans lequel le train d'engrenage (22) est un train épicycloïdal.

5. Turboréacteur à double flux (10) selon la revendication 4, dans lequel le train épicycloïdal (22) est un train d'engrenage stellaire.

6. Turboréacteur à double flux (10) selon la revendication 1, dans lequel un compresseur haute pression (26) et une turbine (28) sont montés sur la bobine supérieure (24).

7. Turboréacteur à double flux (10) selon la revendication 4, dans lequel le dispositif de commande d'écoulement (41) comporte un dispositif de commande (50) programmé pour modifier efficacement la surface de sortie de buse (40) en réponse à un état détecté par au moins un capteur (52, 54, 56, 58, 60) indiquant un état de fonctionnement non souhaité, pour obtenir l'état de fonctionnement souhaité.

8. Turboréacteur à double flux (10) selon la revendication 7, dans lequel le dispositif de commande (50) ordonne à un actionneur (46) de modifier physiquement une taille de la surface de sortie de buse (40).

9. Turboréacteur à double flux selon la revendication 5, dans lequel le train d'engrenage stellaire (22) fournit un rapport de réduction supérieur à 2,5:1.

10. Turboréacteur à double flux (10) selon la revendication 1, dans lequel le chemin d'écoulement de dérivation (39) fournit un rapport de dérivation supérieur à 10:1.
